# EUROPÄISCHE PATENTSCHRIFT

(11) **EP 4 114 710 B1**
(45) Veröffentlichungstag und Bekanntmachung des Hinweises auf die Patenterteilung: **26.11.2025**
(21) Anmeldenummer: 21708203.1
(22) Anmeldetag: 25.02.2021
(51) Int. Cl.: B62D 1/183, B60R 25/0215, B62D 5/00, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 03.03.2020 DE 102020105625
(43) Veröffentlichungstag der Anmeldung: 11.01.2023
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2021/054698
(87) Internationale Veröffentlichungsnummer: WO 2021/175699

(56) Entgegenhaltungen:
- WO-A1-2019/101781
- WO-A1-2019/101781
- CN-Y- 2 789 100
- CN-Y- 2 789 100
- JP-A- 2006 143 117
- JP-A- 2006 143 117
- JP-A- 2009 298 229
- JP-A- 2009 298 229
- US-A1- 2015 114 054
- US-A1- 2015 114 054
- US-A1- 2019 016 365
- US-A1- 2019 016 365

## Beschreibung

### Stand der Technik

Die Erfindung betrifft eine Lenksäule für ein Kraftfahrzeug, umfassend eine Lenkspindel, die um eine in einer Längsrichtung erstreckte Längsachse drehbar in einem Innenmantelrohr einer Manteleinheit gelagert ist, das in einem Außenmantelrohr teleskopartig in Längsrichtung verstellbar aufgenommen ist, wobei eine Verriegelungseinrichtung ein an der Lenkspindel angebrachtes Eingriffselement umfasst, das in einen lösbaren Verriegelungseingriff bringbar ist mit einem korrespondierenden Blockierelement der Manteleinheit, um eine Drehung der Lenkspindel relativ zur Manteleinheit zu blockieren, wobei die Verriegelungseinrichtung an einem Zwischenmantelrohr angeordnet ist, welches teleskopartig verstellbar zwischen dem Innenmantelrohr und dem Außenmantelrohr angeordnet ist, wobei das Blockierelement ein relativ zum Zwischenmantelrohr quer zur Längsachse bewegbar gelagertes Riegelelement umfasst, welches quer zur Längsachse in Verriegelungseingriff bringbar ist mit dem Eingriffselement.

Die Lenksäule eines Kraftfahrzeugs weist eine Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Manteleinheit drehbar gelagert, die von einer Trageinheit an der Fahrzeugkarosserie gehalten ist.

Eine gattungsgemäße Lenksäule ist in Längsrichtung, d.h. in Richtung der Längsachse, verstellbar. Im manuellen Fahrbetrieb ermöglicht die Verstellung, das Lenkrad in der Betriebs- oder Bedienposition für einen bequemen manuellen Lenkeingriff an die Fahrerposition anzupassen. Beim autonomen Fahren, d.h. im autonomen Fahrbetrieb, in dem kein manueller Lenkeingriff erfolgt, kann die Lenksäule durch entsprechende Verstellung eingefahren und kompakt verstaut werden. Dazu werden ein Außenmantelrohr der Manteleinheit, kurz auch als Außenmantel bezeichnet, und ein Innenmantelrohr, oder Innenmantel, in Längsrichtung so weit wie möglich zusammengeschoben, um die Manteleinheit mit dem Lenkrad in eine Verstauposition außerhalb der Betriebsposition zu bringen, so dass der Fahrzeuginnenraum für eine anderweitige Nutzung freigegeben wird.

Insbesondere ist die gattungsbildende Lenksäule für ein Steer-by-Wire-Lenksystem geeignet. Steer-by-wire-Lenksysteme für Kraftfahrzeuge nehmen manuelle Lenkbefehle des Fahrers wie konventionelle mechanische Lenkungen durch Drehung des an der Lenkspindel angebrachten Lenkrads entgegen. Ein in die Lenkspindel eingebrachter Lenkbefehl wird mittels Drehwinkel- bzw. Drehmomentsensoren erfasst, und ein daraus erzeugtes elektrisches Steuersignal wird an einen Lenksteller abgeben, der mittels eines elektrischen Stellantriebs einen entsprechenden Lenkeinschlag der Räder einstellt. Es ist keine mechanische Verbindung zwischen der Lenkspindel und den lenkbaren Rädern erforderlich. Folglich wirkt dann kein dem Lenkbefehl entgegenwirkendes Reaktions- oder Rückstellmoment auf das Lenkrad zurück. Zur Erzeugung eines realistischen Lenkgefühls kann mittels eines elektromechanischen Feedback-Aktuators ein realitätsnahes Rückstellmoment erzeugt und in die Lenkspindel eingekoppelt werden.

Wenn der Feedback-Aktuator deaktiviert ist, beispielsweise im autonomen Fahrbetrieb oder durch elektrische Abschaltung beim Abstellen des Fahrzeugs, wird kein Rückstell- oder Haltemoment erzeugt. Damit das Lenkrad dann nicht unkontrolliert bewegt wird, auch wenn es beispielsweise als Ablage oder zum Festhalten beim Ein- und Aussteigen genutzt wird, ist es im Stand der Technik beispielsweise aus der EP 2 615 009 A1 oder der US 2017/0369091 A1 bekannt, eine Verriegelungseinrichtung vorzusehen, welche eine Verdrehung der Lenkspindel relativ zur Manteleinheit in einer Verstauposition blockiert.

Die bekannte Verriegelungseinrichtung umfasst ein Eingriffselement an der Lenkspindel, welches in einer Verstauposition mit einem mit der Manteleinheit verbundenen Blockierelement in Eingriff gebracht wird. Eingriff- und Blockierelemente sind als korrespondierende Formschlusselemente am Außenumfang der Lenkspindel und am Innenumfang des Außenmantels ausgebildet, die durchverstellen in Längsrichtung in Eingriff gebracht werden können. Dadurch kann eine selbsttätige Blockierung in der zusammengeschobenen Verstauposition realisiert werden. Nachteilig ist jedoch der relativ große radiale Bauraumbedarf zwischen Lenkspindel und Außenmantel, und die eingeschränkten Gestaltungsmöglichkeiten der teleskopierenden Manteleinheit.

Eine Lenksäule der eingangs genannten Art ist aus der JP 2009 298229 A bekannt. Nachteilig daran ist die Anordnung der Verriegelungseinrichtung, die relativ viel Bauraum beansprucht und einer flexiblen Anpassung entgegensteht.

Angesichts der vorangehend erläuterten Problematik ist es eine Aufgabe der vorliegenden Erfindung, eine Lenksäule mit einer verbesserten Verriegelungseinrichtung anzugeben, die insbesondere eine effektivere und flexiblere Gestaltung ermöglicht.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Lenkspindel, die um eine in einer Längsrichtung erstreckte Längsachse drehbar in einem Innenmantelrohr einer Manteleinheit gelagert ist, das in einem Außenmantelrohr teleskopartig in Längsrichtung verstellbar aufgenommen ist, wobei eine Verriegelungseinrichtung ein an der Lenkspindel angebrachtes Eingriffselement umfasst, das in einen lösbaren Verriegelungseingriff bringbar ist mit einem korrespondierenden Blockierelement der Manteleinheit, um eine Drehung der Lenkspindel relativ zur Manteleinheit zu blockieren, wobei die Verriegelungseinrichtung an einem Zwischenmantelrohr angeordnet ist, welches teleskopartig verstellbar zwischen dem Innenmantelrohr und dem Außenmantelrohr angeordnet ist, wobei das Blockierelement ein relativ zum Zwischenmantelrohr quer zur Längsachse bewegbar gelagertes Riegelelement umfasst, welches quer zur Längsachse in Verriegelungseingriff bringbar ist mit dem Eingriffselement, ist erfindungsgemäß vorgesehen, dass das Riegelelement in dem Zwischenmantelrohr beweglich gelagert ist.

Die erfindungsgemäße Lenksäule ist insbesondere für ein Steer-by-Wire-Lenksystem geeignet.

Die erfindungsgemäße Manteleinheit weist eine teleskopartige Anordnung von mindestens drei Mantelrohren auf, nämlich einem äußeres Mantelrohr oder Außenmantelrohr, einem inneren Mantelrohr oder Innenmantelrohr, sowie mindestens einem koaxial dazwischen eingesetzten Zwischenmantelrohr. Zur Einstellung der Verstauposition können die drei Mantelrohre so weit zusammengeschoben, d.h. eingefahren werden, dass das Innen- und das oder die Zwischenmantelrohre in Längsrichtung im Wesentlichen im Außenmantelrohr versenkt sind, d.h. mit ihrer überwiegenden Längserstreckung in das Außenmantelrohr eintauchen. Dadurch kann ein großes Verstellverhältnis zwischen der maximal auseinander gezogenen Bedienposition und der maximal zusammen geschobenen Verstauposition realisiert werden, und auch eine möglichst kompakte, kurze Längsabmessung der Manteleinheit in Verstauposition.

Eine erfindungsgemäße Besonderheit gegenüber dem bekannten Stand der Technik ist, dass das Riegelelement in dem Zwischenmantelrohr beweglich gelagert ist. Das Zwischenmantelrohr ermöglicht nämlich ein großes Verstellverhältnis und kann erfindungsgemäß zusätzlich eine Verriegelungsfunktion erfüllen. Die funktionale Verbindung der Verriegelungseinrichtung mit dem Zwischenmantelrohr ermöglicht darüber hinaus eine vereinfachte und flexible Möglichkeit der Verriegelung einer Manteleinheit mit Mehrfachteleskop, bei der ein ohnehin vorhandenes Zwischenmantelrohr eine zusätzliche Verriegelungsfunktionalität erhält, ohne dabei zusätzlichen Bauraum zu beanspruchen.

Das Riegelelement kann mit geringem Fertigungs- und Bauraumaufwand in dem Zwischenmantelrohr beweglich gelagert sein, beispielsweise als verlagerbarer Sperrstift, als Sperrklinke oder dergleichen und dadurch bevorzugt quer zur Längsrichtung, beispielsweise in radialer Richtung, und bevorzugt formschlüssig in Eingriff bringbar sein mit dem Eingriffselement. Das Eingriffselement kann hierzu beispielsweise korrespondierende Sperrelemente wie Eingriffsöffnungen, Nuten oder dergleichen aufweisen, welche beispielsweise außen im Umfang angeordnet sein können, bevorzugt in einer Mehrzahl über den Umfang verteilt, besonders bevorzugt gleichmäßig verteilt über den Umfang. Dadurch kann eine Verriegelung in verschiedenen Winkelstellungen erfolgen. Derartige Riegel- und Sperrelemente können mit geringem Aufwand bereitgestellt werden, und gewährleisten eine sichere Funktion.

Es kann vorteilhaft sein, dass die Verriegelungseinrichtung ausgestaltet ist, so dass der Verriegelungseingriff in einer vorbestimmten Verstauposition erzeugt wird, in der das Innenmantelrohr in das Zwischenmantelrohr und/oder das Zwischenmantelrohr in das Außenmantelrohr in Längsrichtung weiter eintauchen als in einer Betriebsposition. Beim Verstauen, dies entspricht dem Verstellen aus der Betriebsposition heraus in die Verstauposition, wird das Innenmantelrohr in ein Zwischenmantelrohr hinein bewegt, und/oder das oder ein Zwischenmantelrohr wird in das Außenmantelrohr hinein bewegt. Das an der Lenkspindel angeordnete Eingriffselement, welches in der Betriebsposition Abstand in Längsrichtung von dem Blockierelement hat, wird beim Verstauen in Längsrichtung auf das Blockierelement zu bewegt, bis es in der Verstauposition darin eingreift und die Lenkspindel drehfest mit dem Zwischenmantelrohr verriegelt. Beim Herausbewegen aus der Verstauposition werden Eingriffselement und Blockierelement voneinander gelöst, und die Drehung der Lenkspindel wird freigegeben.

Vorzugsweise kann das Zwischenmantelrohr drehfest relativ zum Außenmantelrohr und/oder zum Innenmantelrohr gehalten sein. Dadurch ist die Lenkspindel in der blockierten Verstauposition über das Zwischenmantelrohr drehfest bezüglich der Längsachse in der Manteleinheit fixiert und gesichert.

Bei der Erfindung können zwischen Innen- und Außenmantelrohr ein oder mehrere teleskopierbare Zwischenmantelrohre eingesetzt sein, um ein Drei- oder Mehrfach-Teleskop zu bilden. Dadurch kann für eine gegebene, maximal ausgefahrene Betriebslänge der Manteleinheit eine kürzere Verstaulänge in der maximal zusammengeschobenen Verstauposition ermöglicht werden.

Die Mantelrohre können bevorzugt miteinander drehschlüssig verbunden sein. Hierzu können Innen-, Außen- und Zwischenmantelrohre einen unrunden Querschnitt haben, und beispielsweise oval, oder als Vier-, Sechs-, Acht- oder Mehrkant ausgebildet sein. Dadurch ist das Zwischenmantelrohr drehfest in der Manteleinheit gehalten.

Zur Längsverstellung ist es vorteilhaft, dass die Lenkspindel eine koaxial in einer Außenwelle drehmomentschlüssig, teleskopartig in Richtung der Längsachse verschiebbar aufgenommene Innenwelle aufweist. Dadurch wird die Lenkspindel beim Verstellen in Längsrichtung auseinander gezogen oder zusammen geschoben. Beispielsweise kann die Außenwelle im Innenmantelrohr gelagert sein, und die Innenwelle im Außenmantelrohr. Bevorzugt kann das Eingriffselement an der Außenwelle angebracht sein, welches in Verstauposition in ein Blockierelement eingreift, welches an einem Zwischenmantelrohr ausgebildet sein kann.

Eine vorteilhafte Ausführung ist, dass ein Blockierelement an dem Zwischenmantelrohr angeordnet ist. Dadurch kann die Lenkspindel in Verstauposition einfach drehfest mit dem Zwischenmantelrohr verriegelt werden, indem das Eingriffselement und das Blockierelement ineinander eingreifen. Es wird eine vorteilhaft kleine Bauweise ermöglicht.

Es kann vorgesehen sein, dass das Eingriffselement ein Formschlusselement aufweist, welchen in Längsrichtung in Verriegelungseingriff bringbar ist mit einer korrespondierenden Formschlussaufnahme des Zwischenmantelrohrs. Das Formschlusselement kann einfach einen sich in Längsrichtung erstreckenden unrunden Querschnitt haben, beispielsweise mehreckig, sternförmig oder dergleichen, und einen in Längsrichtung vorstehenden Zapfen oder eine eingeformte Vertiefung aufweisen. Die Formschlussaufnahme kann eine korrespondierende Formschlussöffnung oder -vertiefung oder umfassen, in welche das Formschlusselement beim Verstellen in die Verstauposition in Längsrichtung eintauchen kann, um eine drehschlüssige Verbindung zu erzeugen, oder einen vorstehenden Formschlusszapfen, der mit einem offenen Formschlusselement korrespondiert. Vorzugsweise können Formschlusselement und -aufnahme endseitig an dem in das Zwischenmantelrohr eintauchenden, vorderen Ende der Lenkspindel und in einem vorderen Endbereich des Zwischenmantelrohr angeordnet sein. Beispielsweise kann das Zwischenmantelrohr an ihrem vorderen Ende eine Wand haben, gegen die die Lenkspindel in der Verstauposition in Längsrichtung anschlägt, und welche eine Formschlussaufnahme aufweist, in welche das Formschlusselement der Lenkspindel beim Anschlag in der Verstauposition erfindungsgemäß eingreift. Eine derartige Formschlussverbindung ist mit geringem Aufwand realisierbar, raumsparend und zuverlässig.

Es kann vorgesehen sein, dass das Blockierelement ein relativ zum Zwischenmantelrohr quer zur Längsachse bewegbar gelagertes Riegelelement umfasst, welches quer zur Längsachse in Verriegelungseingriff bringbar ist mit dem Eingriffselement. Das Riegelelement kann relativ zum Zwischenmantelrohr durch Bewegen in die eine oder andere Richtung umgeschaltet werden zwischen einer Blockier- oder Verriegelungsstellung und einer Lösestellung. In der Blockier- oder Verriegelungsstellung, die bevorzugt in der Verstauposition eingeschaltet wird, befindet sich das Blockierelement in Wirkeingriff mit dem Eingriffselement, und dadurch ist die Lenkspindel mit dem Zwischenmantelrohr drehfest verriegelt. In der Lösestellung, bevorzugt außerhalb der Verstauposition, besteht kein Wirkeingriff zwischen Blockierelement und Eingriffselement, so dass eine Drehung der Lenkspindel ermöglicht ist.

Eine vorteilhafte Weiterbildung kann sein, dass das Riegelelement an dem Zwischenmantelrohr bewegbar gelagert ist und ausgebildet ist, um mit einem Betätigungsmittel des Außenmantelrohrs derart zusammenzuwirken, dass es in einer vorbestimmten Verstauposition in Verriegelungseingriff gebracht wird. Das Riegelelement kann derart gelagert sein, dass es in Lösestellung beispielsweise über den Außenquerschnitt des Zwischenmantelrohr vorsteht, beispielsweise radial nach außen, dass es beim Verstellen in die Verstauposition, wenn es in das Außenmantelrohr hinein bewegt wird, vor oder bei dem Erreichen der Verstauposition in Längsrichtung in Kontakt kommt mit einem an dem Außenmantelrohr angeordneten oder ausgebildeten Betätigungsmittel, beispielsweise einem Betätigungsvorsprung, einer Betätigungsschräge oder dergleichen. Dadurch wird eine Art Umlenkvorrichtung gebildet, die eine Relativbewegung von Zwischen- und Außenmantelrohr umgesetzt in eine Bewegung des Riegelelements in die relativ zum Zwischenmantelrohr aus der Lösestellung in die Blockierstellung, oder umgekehrt. Das Riegelelement kann beispielsweise radial durch Zwischenmantelrohr hindurch ragen, und ein Betätigungsmittel kann eine relativ zur Längsachse geneigte Führungsfläche im oder am Außenmantelrohr umfassen. Durch eine derartige schräge Führungsfläche kann das Riegelelement beim Verstauen in vorteilhafter Weise selbsttätig radial nach innen in die Blockier- oder Verriegelungsstellung bewegt werden.

Das Innenmantelrohr kann im Bereich des Eingriffselements einen Durchgang aufweisen, durch die das Riegelelement hindurchbewegbar ist, um in Verriegelungseingriff mit dem Eingriffselement gebracht zu werden. Die Lenkspindel ist in dem Innenmantelrohr drehbar gelagert, beispielsweise mit der Außenwelle, an der ein Eingriffselement angebracht ist. In der Verstauposition kann das Riegelelement in seiner Verriegelungsstellung durch den Durchgang hindurch in das Eingriffselement eingreifen. Vorteilhaft dabei ist die kompakte Bauform und die Möglichkeit, das Innenmantelrohr, die Lenkspindel und das Zwischenmantelrohr zusammen miteinander zu verriegeln, wobei das Innenmantelrohr auch in Längsrichtung fixiert sein kann.

Es ist ebenfalls möglich, dass das Riegelelement an dem Innenmantelrohr bewegbar gelagert ist und ausgebildet ist, um mit einem Betätigungsmittel des Zwischenmantelrohrs derart zusammenzuwirken, dass es in einer vorbestimmten Verstauposition in Verriegelungseingriff mit dem Eingriffselement gebracht wird. In dieser Ausführung kann das Riegelelement bewegbar an dem Innenmantelrohr gelagert sein, analog zu der oben beschriebenen beweglichen Lagerung an dem Zwischenmantelrohr. Das Zwischenmantelrohr kann dann beispielsweise Betätigungsmittel der Verriegelungseinrichtung umfassen, beispielsweise Führungsflächen, Schrägen, Vorsprünge oder dergleichen einer Umlenkvorrichtung zur Umsetzung einer Relativbewegung von Innen- und Zwischenmantelrohr in Längsrichtung in eine Querbewegung des Riegelelements, so dass beim Verstauen das Riegelelement selbsttätig in die Blockier- oder Verriegelungsstellung bewegt wird.

Es ist möglich, dass das Riegelelement entgegen dem Verriegelungseingriff vorgespannt ist. Durch ein elastisches Element, wie ein Federelement oder dergleichen, wir das Riegelelement in seiner Lösestellung gehalten, oder, wenn es sich in der Blockier- oder Verriegelungsstellung befindet in dieser Richtung federbelastet. Durch die Federwirkung wird das Riegelelement selbsttätig in die Lösestellung umgeschaltet, wenn die Lenksäule aus der Verstauposition herausbewegt wird. Beispielsweise drückt das Federelement das Riegelelement radial nach außen, so dass es aus den Eingriffselement entfernt wird, wenn das Zwischenmantelrohr aus dem Außenmantelrohr, oder das Innenmantelrohr aus dem Zwischenmantelrohr aus der Verstauposition in Richtung auf die Betriebsposition zu heraus bewegt wird.

Es ist vorteilhaft, dass ein Feedback-Aktuator mit der Lenkspindel gekoppelt ist. Der Feedback-Aktuator weist eine mit der Lenkspindel gekoppelte oder koppelbare Antriebseinheit auf, beispielsweise einen Elektromotor zur Erzeugung und Einleitung eines Feedback-Drehmoments. Die Antriebseinheit des Feedback-Aktuators kann bevorzugt an dem bezüglich der Fahrtrichtung vorderen Ende der Lenkwelle angeordnet sein. Der Feedback-Aktuator kann raumsparend in die Manteleinheit integriert sein, oder außen montiert sein.

Eine vorteilhafte Ausführung der Erfindung sieht vor, dass ein elektromechanischer Verstellantrieb in Längsrichtung an der Manteleinheit angreift. Dabei kann es sich um einen an den Mantelrohren angreifenden Linearantrieb handeln, beispielsweise einen motorisch antreibbaren Spindeltrieb, um die Mantelrohre teleskopierend zusammenzuschieben oder auseinanderzuziehen. Besonders bei Steer-by-Wire-Lenksäulen ermöglich ein derartiger Längsverstellantrieb die automatisierte Verstellung zwischen Verstau- und Betriebsposition. Die Erfindung bietet dabei den besonderen Vorteil einer besonders raumsparenden Verstauung mit zuverlässiger Verriegelung der Lenkspindel.

Alternativ oder zusätzlich kann eine motorisierte Höhenverstellung dadurch realisiert werden, dass ein elektromechanischer Verstellantrieb in einer Höhenrichtung an der Manteleinheit angreift. Ein derartiger Höhen-Verstellantrieb kann in an sich bekannter Weise ebenfalls einen Spindeltrieb oder dergleichen umfassen, der beispielsweise an der Manteleinheit und an einer diese höhenverstellbar lagernden Trageinheit angreift.

### Beschreibung der Zeichnungen

Vorteilhafte Ausführungsformen der Erfindung werden im Folgenden anhand der Zeichnungen näher erläutert. Im Einzelnen zeigen:
- Figur 1: eine gattungsgemäße Lenksäule in einer schematischen perspektivischen Ansicht,
- Figur 2: einen Längsschnitt durch eine Lenksäule gemäß Figur 1 in Betriebsposition,
- Figur 3: einen Längsschnitt wie in Figur 2 in Verstauposition,
- Figur 4: einen Querschnitt A-A durch die Lenksäule gemäß Figur 3,
- Figur 5: einen Längsschnitt durch eine zweite Ausführung einer gattungsgemäßen
- Figur 6: Lenksäule in Betriebsposition, einen Längsschnitt wie in Figur 5 in Verstauposition,
- Figur 7: einen Längsschnitt durch eine Ausführung einer erfindungsgemäßen Lenksäule in Betriebsposition,
- Figur 8: einen Längsschnitt wie in Figur 7 in Verstauposition.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

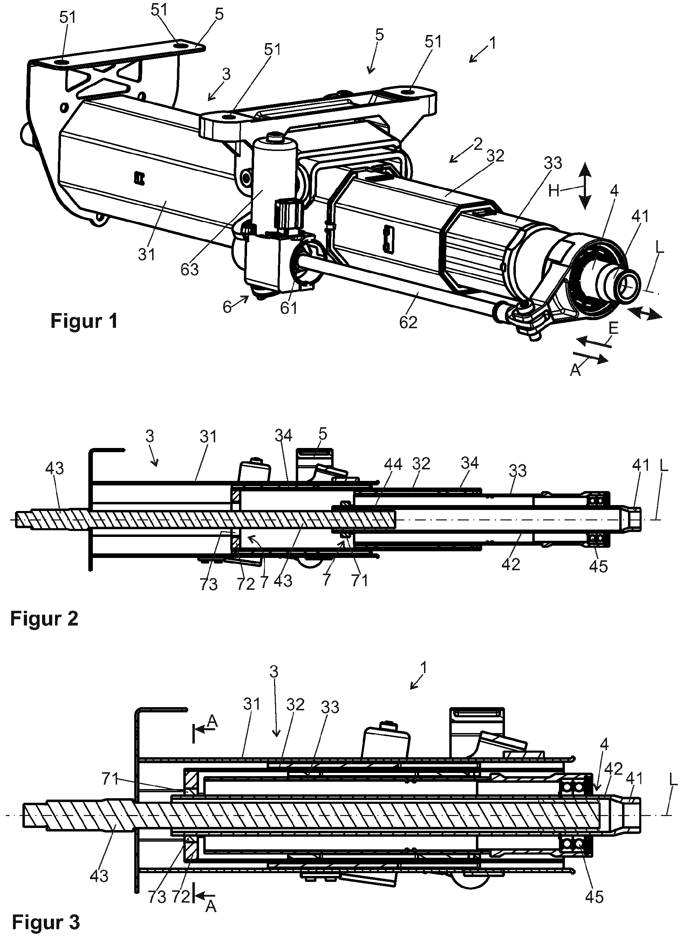

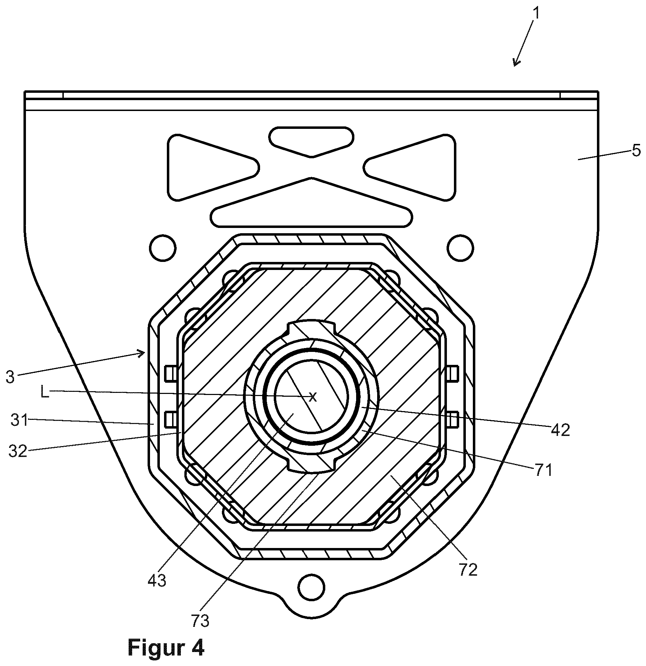

Figur 1 zeigt eine gattungsgemäße Lenksäule 1 in einer perspektivischen Ansicht bezüglich der Fahrtrichtung von schräg hinten. Figur 3 zeigt einen Längsschnitt einer ersten Ausführungsform in Verstauposition in maximal eingefahrenem bzw. zusammen gefahrenem Zustand, und Figur 2 in derselben Schnittansicht wie in Figur 3 in einer möglichen Bedien- bzw. Betriebsposition in einem ausgefahrenen bzw. auseinander gezogenen Zustand. In Figur 4 ist ein Querschnitt A-A aus Figur 3 gezeigt.

In den Darstellungen der Figuren 1 bis 3 und 5 bis 8 befindet sich das in Fahrtrichtung vordere, karosserieseitige Ende der Lenksäule 1 links. Das hintere, fahrerseitige Ende weist entsprechend nach rechts.

Die Lenksäule 1 weist eine Stelleinheit 2 auf. Die Stelleinheit 2 umfasst eine Manteleinheit 3 mit drei Mantelrohren 31, 32, 33, nämlich einem Außenmantelrohr 31, einem Zwischenmantelrohr 32 und einem Innenmantelrohr 33. Die Mantelrohre 31, 32 und 33 sind koaxial ineinander angeordnet und in Längsrichtung, dies entspricht der Achsrichtung einer Längsachse L, teleskopierend verschiebbar zueinander, wie mit dem Doppelpfeil angedeutet. Dabei ist die eine Richtung, in der die Mantelrohre 31, 32, 33 zur Verkürzung der Manteleinheit 3 in die Verstauposition ineinander zusammen bewegt werden, d.h. eingefahren werden, die Einfahrrichtung E, und entsprechend die entgegengesetzte Richtung, in der die Mantelrohre 31, 32, 33 aus der Verstauposition in Richtung einer Betriebsposition auseinander bewegt werden, d.h. ausgefahren werden, die Ausfahrrichtung A, wie mit dem Pfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Aus Figur 2 und 3 ist entnehmbar, dass die Lenkspindel 4 ebenfalls in Längsrichtung, d.h. in Richtung der Längsachse L, teleskopierbar ausgebildet, mit einer als Hohlwelle ausgebildeten Außenwelle 42, in die eine Innenwelle 43 in Längsrichtung teleskopierend verschiebbar eintaucht. Die Innenwelle 43 und die Außenwelle 42 sind drehmomentschlüssig über eine längsverschiebliche Kupplung 44 miteinander verbunden, die in an sich bekannter Weise über unrunde Querschnitte, Längsverzahnungen oder dergleichen eine drehschlüssige, in Längsrichtung verschiebbare Verbindung erzeugt. Die Außenwelle 42 ist in dem Innenmantelrohr 33 in einem Lager 45 gelagert, welches bevorzugt Wälzlager aufweist, die ein- oder mehrreihig ausgebildet sein können. Die Innenwelle 43 kann in dem Außenmantelrohr drehbar gelagert sein. Die Innenwelle 43 kann bevorzugt mit einer Welle eines hier nicht dargestellten Feedback-Aktuators eines Steer-by-Wire-Lenksystems eines Kraftfahrzeugs verbindbar sein. Eine mechanische Verbindung zu den lenkbaren Rädern kann dann entfallen. Alternativ kann die Innenwelle 43 auch mit einer Lenkzwischenwelle koppelbar sein, die wiederum mit einer Eingangswelle eines Lenkgetriebes drehmomentschlüssig gekoppelt sein kann.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Richtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Längsrichtung entweder in Einfahrrichtung E in das Außenmantelrohr 31 eingefahren oder entgegengesetzt in Ausfahrrichtung A aus dem Außenmantelrohr 31 ausgefahren werden kann. Dadurch wird eine Längsverstellung realisiert, durch die ein an dem Anschlussabschnitt 41 angebrachtes Lenkrad wahlweise nach vorn, in Figur 3 nach rechts in die dargestellte Verstauposition, in der das Innenmantelrohr 33 und das Zwischenmantelrohr 32 maximal in das Außenmantelrohr 31 eintauchen, oder nach hinten in die in Figur 2 dargestellte Betriebsposition gebracht werden kann, in der die Mantelrohre 31, 32 und 33 auseinander ausgefahren sind.

Die Mantelrohre 31, 32 und 33 haben einen unrunden, im gezeigten Beispiel achteckigen Querschnitt. Dadurch sind sie drehschlüssig bezüglich Rotation um die Längsachse verbunden.

Zwischen dem Außenmantelrohr 31 und dem Zwischenmantelrohr 32 und/oder zwischen dem Zwischenmantelrohr 32 und dem Innenmantelrohr 33 können optionale Gleithülsen 34 angeordnet sein, die bevorzugt aus einem Kunststoff gebildet sein können. Als Gleithülsen 34 können auch Kugel- oder Rollenbuchsen eingesetzt werden, wobei denkbar und möglich ist, dass die Gleithülse als Käfig ausgebildet sein kann, die Wälzkörper drehbar gelagert aufnimmt, so dass die Mantelrohre zueinander wälzgelagert sind.

Alternativ kann sich die Spindelmutter 61 an dem Innenmantelrohr 33, und die Gewindespindel 62 an dem Außenmantelrohr 31 abstützen.

Eine gattungsgemäße Verriegelungseinrichtung 7 weist in der in den Figuren 2 und 3 gezeigten ersten Ausführungsform ein Formschlusselement 71 auf, welches an der Lenkspindel 4 ist im vorderen Bereich der Außenwelle 42 drehfest angebracht ist. Das Formschlusselement 71 ist ein Eingriffselement, welches gemäß Figur 4 einen unrunden Querschnitt mit zwei radial gegenüberliegenden radialen Vorsprüngen hat. An dem Zwischenmantelrohr 32 ist am vorderen Ende eine Wand 72 befestigt, die eine koaxiale Formschlussöffnung 73 aufweist, die eine Formschlussaufnahme bzw. ein Blockierelement darstellt. Der offene Querschnitt der Formschlussöffnung 73 ist an das Formschlusselement 71 angepasst zur Ausbildung einer drehschlüssigen Verbindung durch Einsetzen in Längsrichtung, wie in Figur 4 gezeigt.

Das Zwischenmantelrohr 32 und die Wand 72 können in einer nicht dargestellten Weiterbildung auch als ein einstückiges Bauteil ausgebildet sein, beispielsweise in dem die Wand 72 mit dem Zwischenmantelrohr 32 verschweißt ist.

Beim Verstauen wird ausgehend von der in Figur 2 gezeigten Betriebsposition das Innenmantelrohr 33 samt der Außenwelle 42 in Einfahrrichtung E, in der Zeichnung nach links, in das Zwischenmantelrohr 32, und dieses in das Außenmantelrohr 31 hineingeschoben, bis die in Figur 3 gezeigte Verstauposition erreicht ist. Dabei wird das Formschlusselement 71 in die Formschlussöffnung 73 eingesetzt. Dadurch ist die Lenkspindel mit dem Zwischenmantelrohr 32 und damit über das Außenmantelrohr 31 mit der Manteleinheit 3 drehfest verriegelt.

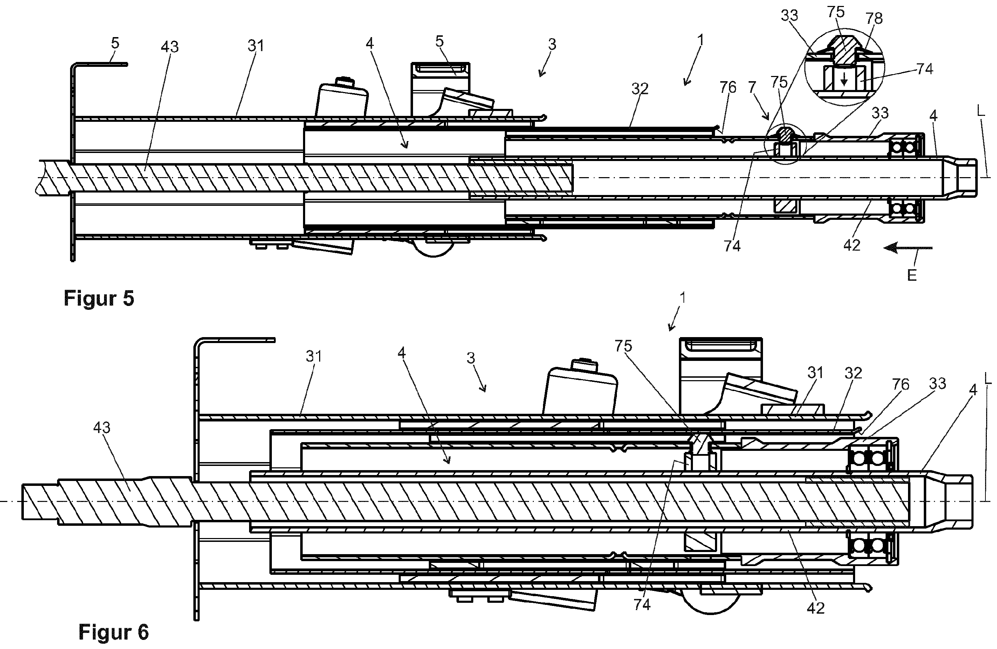

Figuren 5 und 6 zeigen Schnittansichten einer zweiten gattungsgemäße Ausführungsform in Ansichten entsprechend Figuren 2 und 3, nämlich in Verstauposition (Figur 6) und Betriebsposition (Figur 5). Für gleichwirkende Teile werden dieselben Bezugszeichen wie oben verwendet.

Die gattungsgemäße Verriegelungseinrichtung 7 umfasst ein an der Außenwelle 42 fixiertes Eingriffselement 74, in das ein in der Wandung des Innenmantelrohrs 33 in radialer Richtung, quer zur Längsachse L beweglich gelagertes Riegelelement 75 in radialer Richtung nach innen formschlüssig in Eingriff gebracht werden kann, wie in der Ausschnittvergrößerung von Figur 5 mit dem Pfeil angedeutet ist. Das Eingriffselement 74 hat beispielsweise eine Anzahl über den Umfang verteilter Aufnahmeöffnungen.

Wird das Innenmantelrohr 33 zum Verstauen in Einfahrrichtung E in das Zwischenmantelrohr 32 hinein geschoben, ausgehend von der Betriebsposition in Figur 5 nach links, kontaktiert das Riegelelement 75 mit einem radial nach außen über das Innenmantelrohr 33 vorstehenden Abschnitt eine Betätigungsschräge 76 an dem Zwischenmantelrohr 32. Diese Betätigungsschräge 76 an dem Zwischenmantelrohr 32 ist Bestandteil der gattungsgemäße Verriegelungseinrichtung 7 und sorgt dafür, dass das Riegelelement 75 in der in Figur 6 dargestellten Verstauposition in das Eingriffselement 74 eingreift, und die Lenkspindel 4 drehfest mit dem Innenmantelrohr 33 und damit über das Zwischenmantelrohr 32 mit der Manteleinheit 3 drehfest verriegelt.

Zur Vorspannung des Riegelelements 75 ist ein Federelement 78 vorgesehen, welches das Riegelelement 75 entgegen der Richtung des Eingriffs federbelastet, also in der Betriebsposition gemäß Figur 5, so dass das Federelement ist in der Betriebsposition (Figur 5) weniger vorgespannt als in der Eingriffsposition (Figur 6).

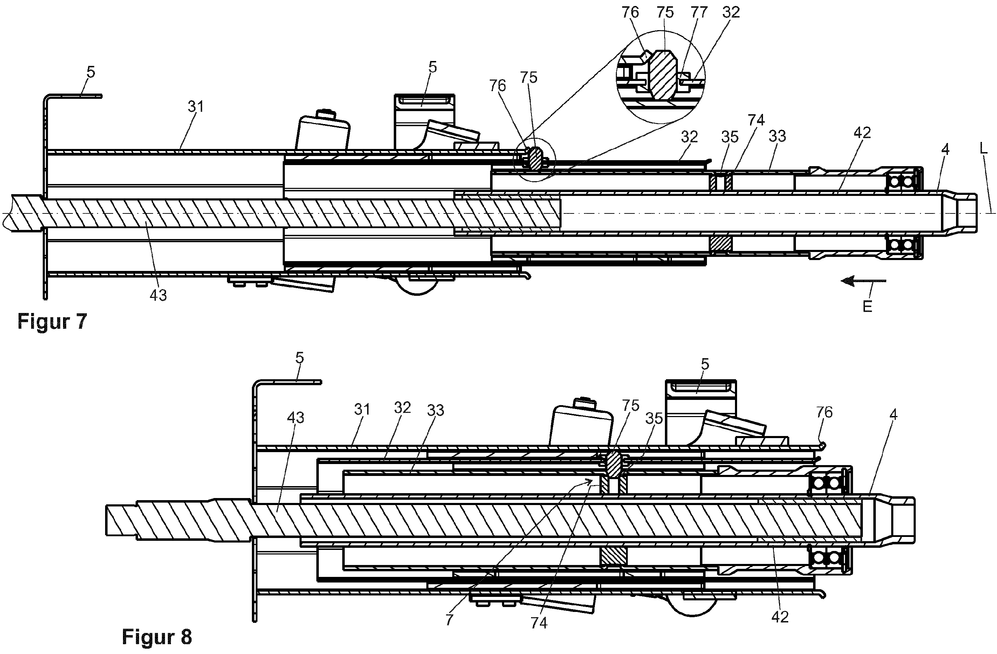

Figuren 7 und 8 zeigen Schnittansichten einer erfindungsgemäßen

Ausführungsform in Ansichten entsprechend Figuren 2 und 3, nämlich in Verstauposition (Figur 7) und Betriebsposition (Figur 8).

Die erfindungsgemäße Verriegelungseinrichtung 7 umfasst einen in einer Öffnung 77 in der Wandung des Zwischenmantelrohrs 32 radial beweglich gelagertes Riegelelement 75, wie in dem vergrößerten Ausschnitt von Figur 7 mit dem Doppelpfeil angedeutet ist.

An der Außenwelle 42 der Lenkspindel 4 ist wie in der vorigen Ausführung ein Eingriffselement 74 befestigt. Im Bereich einer radial offenen Formschlussausnehmung des Eingriffselements 74 hat das Innenmantelrohr 33 eine radiale Durchgangsöffnung 35.

Wird das Zwischenmantelrohr 32 zusammen mit dem Innenmantelrohr 33 zum Verstauen in das Außenmantelrohr 31 hinein verschoben, gelangt das Riegelelement 75 mit seinem radial nach außen über das Zwischenmantelrohr 32 vorstehenden Abschnitt gegen die Betätigungsschräge 76, die in dieser Ausführung hinten an dem Außenmantelrohr 31 angeordnet ist. Dieses bildet eine Umlenkvorrichtung, die die Relativbewegung des Zwischenmantelrohrs 32 relativ zum Außenmantelrohr 31 umsetzt in eine radial nach innen gerichtete Verriegelungsbewegung des Riegelelements 75. Dadurch wird dieses durch die Durchgangsöffnung 35 hindurch radial nach innen bewegt, bis es in der Verstauposition gemäß Figur 8 radial eine Formschlussaufnahme an dem Eingriffselement 74 eingreift und dadurch die Lenkspindel 4 relativ zum Zwischenmantelrohr 32 und damit relativ zur Manteleinheit 3 festsetzt bzw. blockiert.

Die Ausführung gemäß Figuren 7 und 8 kann ein Federelement 78 aufweisen, welches das Riegelelement 75 entgegen der Richtung des Eingriffs federbelastet ist, also in der Betriebsposition gemäß Figur 5. Ein derartiges Federelement 78 kann auch in der Version gemäß Figuren 7 und 8 vorgesehen sein.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34: Gleithülse
- 35: Durchgangsöffnung
- 4: Lenkspindel
- 41: Anschlussabschnitt
- 42: Außenwelle
- 43: Innenwelle
- 44: Kupplung
- 45: Lager
- 5: Trageinheit
- 51: Befestigungsmittel
- 6: Verstellantrieb
- 61: Spindelmutter
- 62: Gewindespindel
- 63: Motor
- 7: Riegeleinrichtung
- 71: Formschlusselement
- 72: Wand
- 73: Formschlussöffnung
- 74: Eingriffselement
- 75: Riegelelement
- 76: Betätigungsschräge
- 77: Durchgangsöffnung
- 78: Federelement

- L: Längsachse
- E: Einfahrrichtung
- A: Ausfahrrichtung

## Patentansprüche

1. Lenksäule (1) für ein Kraftfahrzeug, umfassend eine Lenkspindel (4), die um eine in einer Längsrichtung erstreckte Längsachse (L) drehbar in einem Innenmantelrohr (33) einer Manteleinheit (3) gelagert ist, das in einem Außenmantelrohr (31) teleskopartig in Längsrichtung verstellbar aufgenommen ist, wobei eine Verriegelungseinrichtung (7) ein an der Lenkspindel (4) angebrachtes Eingriffselement (74) umfasst, das in einen lösbaren Verriegelungseingriff bringbar ist mit einem korrespondierenden Blockierelement (73, 75) der Manteleinheit (3), um eine Drehung der Lenkspindel (4) relativ zur Manteleinheit (3) zu blockieren,
wobei die Verriegelungseinrichtung (7) an einem Zwischenmantelrohr (32) angeordnet ist, welches teleskopartig verstellbar zwischen dem Innenmantelrohr (33) und dem Außenmantelrohr (31) angeordnet ist,
wobei das Blockierelement (75) ein relativ zum Zwischenmantelrohr (32) quer zur Längsachse (L) bewegbar gelagertes Riegelelement (75) umfasst, welches quer zur Längsachse (L) in Verriegelungseingriff bringbar ist mit dem Eingriffselement (74), **dadurch gekennzeichnet,**
**dass** das Riegelelement (75) in dem Zwischenmantelrohr (32) beweglich gelagert ist.

2. Lenksäule nach Anspruch 1, **dadurch gekennzeichnet, dass** die Verriegelungseinrichtung (7) ausgestaltet ist, so dass der Verriegelungseingriff in einer vorbestimmten Verstauposition erzeugt wird, in der das Innenmantelrohr (33) in das Zwischenmantelrohr (32) und/oder das Zwischenmantelrohr (32) in das Außenmantelrohr (31) in Längsrichtung weiter eintauchen als in einer Betriebsposition.

3. Lenksäule nach einem der vorangehenden Ansprüche, **dadurch gekennzeichnet, dass** das Zwischenmantelrohr (32) drehfest relativ zum Außenmantelrohr (31) und/oder zum Innenmantelrohr (33) gehalten ist.

4. Lenksäule nach einem der vorangehenden Ansprüche, **dadurch gekennzeichnet, dass** die Lenkspindel (4) eine koaxial in einer Außenwelle (42) drehmomentschlüssig, teleskopartig in Richtung der Längsachse (L) verschiebbar aufgenommene Innenwelle (43) aufweist.

5. Lenksäule nach einem der vorangehenden Ansprüche, **dadurch gekennzeichnet, dass** ein Blockierelement (73, 75) an dem Zwischenmantelrohr (32) angeordnet ist.

6. Lenksäule nach einem der vorangehenden Ansprüche, **dadurch gekennzeichnet, dass** das Eingriffselement ein Formschlusselement (71) aufweist, welches in Längsrichtung in Verriegelungseingriff bringbar ist mit einer korrespondierenden Formschlussaufnahme (73) des Zwischenmantelrohrs (32).

7. Lenksäule nach einem der vorangehenden Ansprüche, **dadurch gekennzeichnet, dass** das Riegelelement (75) an dem Zwischenmantelrohr (32) bewegbar gelagert ist und ausgebildet ist, um mit einem Betätigungsmittel (76) des Außenmantelrohrs (31) derart zusammenzuwirken, dass es in einer vorbestimmten Verstauposition in Verriegelungseingriff gebracht wird.

8. Lenksäule nach einem der vorangehenden Ansprüche, **dadurch gekennzeichnet, dass** das Innenmantelrohr (33) im Bereich des Eingriffselements (74) einen Durchgang (35) aufweist, durch die das Riegelelement (75) hindurchbewegbar ist, um in Verriegelungseingriff mit dem Eingriffselement (74) gebracht zu werden.

9. Lenksäule nach einem der vorangehenden Ansprüche, **dadurch gekennzeichnet, dass** das Riegelelement (75) an dem Innenmantelrohr (33) bewegbar gelagert ist und ausgebildet ist, um mit einem Betätigungsmittel (76) des Zwischenmantelrohrs (32) derart zusammenzuwirken, dass es in einer vorbestimmten Verstauposition in Verriegelungseingriff mit dem Eingriffselement (74) gebracht wird.

10. Lenksäule nach einem der vorangehenden Ansprüche, **dadurch gekennzeichnet, dass** das Riegelelement (75) entgegen dem Verriegelungseingriff vorgespannt ist.

11. Lenksäule nach einem der vorangehenden Ansprüche, **dadurch gekennzeichnet, dass** ein Feedback-Aktuator mit der Lenkspindel (4) gekoppelt ist.

12. Lenksäule nach einem der vorangehenden Ansprüche, **dadurch gekennzeichnet, dass** ein elektromechanischer Verstellantrieb (6) in Längsrichtung an der Manteleinheit (3) angreift.

13. Lenksäule nach einem der vorangehenden Ansprüche, **dadurch gekennzeichnet, dass** ein elektromechanischer Verstellantrieb in einer Höhenrichtung (H) an der Manteleinheit (3) angreift.

## Claims

1. Steering column (1) for a motor vehicle, comprising a steering spindle (4) which is mounted rotatably about a longitudinal axis (L) extending in a longitudinal direction in an inner casing tube (33) of a casing unit (3) which is accommodated in an outer casing tube (31) so as to be adjustable telescopically in the longitudinal direction, wherein a locking device (7) comprises an engagement element (74) which is attached to the steering spindle (4) and which can be brought into a releasable locking engagement with a corresponding blocking element (73, 75) of the casing unit (3) in order to block rotation of the steering spindle (4) relative to the casing unit (3), wherein the locking device (7) is arranged on an intermediate casing tube (32), which is arranged telescopically adjustable between the inner casing tube (33) and the outer casing tube (31),
the blocking element (75) comprising a locking element (75) which is mounted so as to be movable transversely to the longitudinal axis (L) relative to the intermediate casing tube (32) and which can be brought into locking engagement with the engagement element (74) transversely to the longitudinal axis (L),
**characterized in**
**in that** the locking element (75) is movably mounted in the intermediate casing tube (32).

2. Steering column according to claim 1, **characterized in that** the locking device (7) is designed so that the locking engagement is generated in a predetermined stowed position in which the inner casing tube (33) dips further into the intermediate casing tube (32) and/or the intermediate casing tube (32) dips further into the outer casing tube (31) in the longitudinal direction than in an operating position.

3. Steering column according to one of the preceding claims, **characterized in that** the intermediate casing tube (32) is held non-rotatably relative to the outer casing tube (31) and/or to the inner casing tube (33).

4. Steering column according to one of the preceding claims, **characterized in that** the steering spindle (4) has an inner shaft (43) which is received coaxially in an outer shaft (42) in a torque-locking, telescopically displaceable manner in the direction of the longitudinal axis (L).

5. Steering column according to one of the preceding claims, **characterized in that** a blocking element (73, 75) is arranged on the intermediate casing tube (32).

6. Steering column according to one of the preceding claims, **characterized in that** the engagement element has a positive-locking element (71) which can be brought into locking engagement in the longitudinal direction with a corresponding positive-locking receptacle (73) of the intermediate casing tube (32).

7. Steering column according to one of the preceding claims, **characterized in that** the locking element (75) is movably mounted on the intermediate casing tube (32) and is designed to interact with an actuating means (76) of the outer casing tube (31) in such a way that it is brought into locking engagement in a predetermined stowed position.

8. Steering column according to one of the preceding claims, **characterized in that** the inner casing tube (33) has a passage (35) in the region of the engagement element (74), through which the locking element (75) can be moved in order to be brought into locking engagement with the engagement element (74).

9. Steering column according to one of the preceding claims, **characterized in that** the locking element (75) is movably mounted on the inner casing tube (33) and is designed to cooperate with an actuating means (76) of the intermediate casing tube (32) in such a way that it is brought into locking engagement with the engagement element (74) in a predetermined stowed position.

10. Steering column according to one of the preceding claims, **characterized in that** the locking element (75) is biased against the locking engagement.

11. Steering column according to one of the preceding claims, **characterized in that** a feedback actuator is coupled to the steering spindle (4).

12. Steering column according to one of the preceding claims, **characterized in that** an electromechanical adjustment drive (6) engages in the longitudinal direction on the casing unit (3).

13. Steering column according to one of the preceding claims, **characterized in that** an electromechanical adjustment drive acts on the casing unit (3) in a height direction (H).

## Revendications

1. Colonne de direction (1) pour un véhicule automobile, comprenant un arbre de direction (4) qui est logé de manière à pouvoir tourner autour d'un axe longitudinal (L) s'étendant dans une direction longitudinale dans un tube d'enveloppe intérieur (33) d'une unité d'enveloppe (3), qui est logé dans un tube d'enveloppe extérieur (31) de manière à pouvoir être réglé de manière télescopique dans la direction longitudinale, dans lequel un dispositif de verrouillage (7) comprend un élément d'engagement (74) monté sur l'arbre de direction (4), qui peut être amené en engagement de verrouillage libérable avec un élément de blocage correspondant (73, 75) de l'unité d'enveloppe (3), afin de bloquer une rotation de l'arbre de direction (4) par rapport à l'unité d'enveloppe (3),
le dispositif de verrouillage (7) étant disposé sur un tube d'enveloppe intermédiaire (32) qui est disposé de manière réglable de façon télescopique entre le tube d'enveloppe intérieur (33) et le tube d'enveloppe extérieur (31),
l'élément de blocage (75) comprenant un élément de verrouillage (75) logé de manière mobile par rapport au tube d'enveloppe intermédiaire (32) transversalement à l'axe longitudinal (L), lequel peut être amené en engagement de verrouillage transversalement à l'axe longitudinal (L) avec l'élément d'engagement (74),
**caractérisé en ce que**
**en ce que** l'élément de verrouillage (75) est logé de manière mobile dans le tube d'enveloppe intermédiaire (32).

2. Colonne de direction selon la revendication 1, **caractérisée en ce que** le dispositif de verrouillage (7) est conçu de telle sorte que l'engagement de verrouillage est généré dans une position de rangement prédéterminée, dans laquelle le tube d'enveloppe intérieure (33) pénètre dans le tube d'enveloppe intermédiaire (32) et/ou le tube d'enveloppe intermédiaire (32) pénètre dans le tube d'enveloppe extérieure (31) dans la direction longitudinale plus loin que dans une position de fonctionnement.

3. Colonne de direction selon l'une des revendications précédentes, **caractérisée en ce que** le tube d'enveloppe intermédiaire (32) est maintenu fixe en rotation par rapport au tube d'enveloppe extérieure (31) et/ou au tube d'enveloppe intérieure (33).

4. Colonne de direction selon l'une des revendications précédentes, **caractérisée en ce que** l'arbre de direction (4) présente un arbre intérieur (43) logé coaxialement dans un arbre extérieur (42) de manière à être solidaire en couple et à pouvoir coulisser télescopiquement dans la direction de l'axe longitudinal (L).

5. Colonne de direction selon l'une des revendications précédentes, **caractérisée en ce qu'**un élément de blocage (73, 75) est disposé sur le tube d'enveloppe intermédiaire (32).

6. Colonne de direction selon l'une quelconque des revendications précédentes, **caractérisée en ce que** l'élément d'engagement comprend un élément d'engagement positif (71) qui peut être amené en engagement de verrouillage dans la direction longitudinale avec un logement d'engagement positif correspondant (73) du tube d'enveloppe intermédiaire (32).

7. Colonne de direction selon l'une quelconque des revendications précédentes, **caractérisée en ce que** l'élément de verrouillage (75) est monté mobile sur le tube d'enveloppe intermédiaire (32) et est configuré pour coopérer avec un moyen d'actionnement (76) du tube d'enveloppe extérieure (31) de manière à l'amener en prise de verrouillage dans une position de rangement prédéterminée.

8. Colonne de direction selon l'une des revendications précédentes, **caractérisée en ce que** le tube d'enveloppe intérieure (33) présente, dans la zone de l'élément d'engagement (74), un passage (35) à travers lequel l'élément de verrouillage (75) peut être déplacé afin d'être amené en engagement de verrouillage avec l'élément d'engagement (74).

9. Colonne de direction selon l'une quelconque des revendications précédentes, **caractérisée en ce que** l'élément de verrouillage (75) est monté mobile sur le tube d'enveloppe interne (33) et est adapté pour coopérer avec un moyen d'actionnement (76) du tube d'enveloppe intermédiaire (32) de manière à être amené en engagement de verrouillage avec l'élément d'engagement (74) dans une position de rangement prédéterminée.

10. Colonne de direction selon l'une quelconque des revendications précédentes, **caractérisée en ce que** l'élément de verrouillage (75) est précontraint à l'encontre de l'engagement de verrouillage.

11. Colonne de direction selon l'une des revendications précédentes, **caractérisée en ce qu'**un actionneur à rétroaction est couplé à l'arbre de direction (4).

12. Colonne de direction selon l'une des revendications précédentes, **caractérisée en ce qu'**un actionneur de réglage électromécanique (6) est en prise avec l'unité d'enveloppe (3) dans la direction longitudinale.

13. Colonne de direction selon l'une des revendications précédentes, **caractérisée en ce qu'**un entraînement de réglage électromécanique agit sur l'unité d'enveloppe (3) dans une direction de hauteur (H).
